## Europäisches Patentamt

## European Patent Office

## Office européen des brevets

(11) Veröffentlichungsnummer : **0 066 651**
**B1**

(12) EUROPÄISCHE PATENTSCHRIFT

(45) Veröffentlichungstag der Patentschrift :
30.07.86

(21) Anmeldenummer : 81109258.4

(22) Anmeldetag : 29.10.81

(51) Int. Cl.⁴ : **F 01 D 17/24**, **H 02 P 9/04**,
**G 05 D 13/62**, **F 03 B 15/18**,
**G 05 B 13/02**

(54) Verfahren und Einrichtung zur Regelung eines Turbosatzes.

(30) Priorität : 09.03.81 DE 3108915

(43) Veröffentlichungstag der Anmeldung :
15.12.82 Patentblatt 82/50

(45) Bekanntmachung des Hinweises auf die Patenterteilung : 30.07.86 Patentblatt 86/31

(84) Benannte Vertragsstaaten :
AT BE CH DE FR GB IT LI NL SE

(56) Entgegenhaltungen :
CH-A- 570 544
DE-A- 2 551 415
DE-A- 2 627 591
DE-A- 2 903 039
US-A- 4 114 084
VGB KRAFTWERKSTECHNIK, Band 59, Nr. 6, Juni
1979 W. KINDERMANN et al. "Verhalten der Dampf-
turbinen-Leistungsregelung großer Kraftwerksblöcke
bei Netzkurzschlüssen", Seiten 467-472

(73) Patentinhaber : Siemens Aktiengesellschaft
Berlin und München Wittelsbacherplatz 2
D-8000 München 2 (DE)

(72) Erfinder : Plohn, Gerhard, Dipl.-Ing.
Schwanenstrasse 4
D-8520 Erlangen (DE)
Erfinder : Schuh, Manfred
Wehneltstrasse 16
D-8520 Erlangen (DE)

## Beschreibung

Die vorliegende Erfindung betrifft ein Verfahren zur Regelung eines aus einem Generator und einer Turbine bestehenden Turbosatzes entsprechend dem gattungsbildenden Teil des Patentanspruches 1.

Ein derartiges Verfahren ist nach der US-A-4 114 084 bekannt. Dort wird von einem auf die Stellventile wirkenden Regler beim Auftreten einer negativen Leistungsbilanz, d. h. bei Überwiegen der der Turbine zugeführten mechanischen Leistung über die von dem Generator abgegebene Wirkleistung von dem Regler ein auf eine schnelle Unterbrechung der Dampfzufuhr zu der Turbine gerichtetes Signal ausgegeben. Nachteilig ist, daß mit diesem Verfahren das auf die Beseitigung des erwähnten Leistungsüberschusses gerichtete Schließsignal nicht der jeweils auftretenden abgegebenen Generatorwirkleistung angepaßt wird.

Ein anderes übliches Verfahren zur Regelung von Turbosätzen, wie es nach der DE-Zeitschrift « VGB Kraftwerkstechnik 59 », Heft 6, Juni 1979, Seiten 467 bis 472 bekannt ist, besteht darin, den mit seinem Ausgangssignal auf die den Frischdampf freigebenden Stellventile wirkenden Leistungsregler bei Störfällen, wie Lastabwurf oder Netzkurzschluß durch den zum Anfahren der Turbine erforderlichen Drehzahlregler ablösen zu lassen und mit ihm den drehzahlüberhöhenden Einfluß dieser Störung abzufangen, wobei zusätzlich zum Schließbefehl des Drehzahlreglers mittels eines Lastsprungrelais eine konstante Zeit lang ein Schließsignal unmittelbar in die hydraulische Steuerung gegeben wird. Nachteilig bei diesem Verfahren ist, daß bei einem Lastabwurf eine erhebliche Drehzahlbeschleunigung unvermeidbar ist und daß im Fall des Netzkurzschlusses nach dessen Beseitigung das Widerzuschalten des Leistungsreglers unabgeglichen erfolgt, so daß auftretende Leistungspendelungen des Turbosatzes meist noch verstärkt werden.

Nach der DE-A-29 03 039 ist es weiterhin bekannt, zum Abfangen einer durch Lastabwurf entstandenen Überdrehzahl den Leistungsregler mittels einer Minimumschaltung abzulösen, wenn eine Differenz zwischen der Turbinendrehzahl und einer vorgebbaren Drehzahl auftritt, um dann eine Schließung der Stellventile bewirken zu können. Zwar ist damit eine Sicherheit gegen ein Durchgehen der Turbine bei Entlastungen gegeben, eine Überdrehzahl muß jedoch auch hier zunächst in Kauf genommen werden, ehe diese Sicherheitsmaßnahme zum Ansprechen kommen kann.

Die vorliegende Erfindung stellt sich die Aufgabe, die bekannten Regelungsverfahren für Turbosätze der eingangs genannten Art dahingehend zu verbessern, daß die Ursache einer Drehzahlbeschleunigung der Turbine zum frühestmöglichen Zeitpunkt erkannt und ein Schließsignal für eine der jeweils auftretenden Generatorleistung angepaßte Ventilstellung ausgegeben sowie ein hohes Maß an Sicherheit gegen ein Durchgehen der Turbine erreicht wird.

Die erfindungsgemäße Lösung dieser Aufgabe ist im kennzeichnenden Teil des Patentanspruches 1 angegeben. Vorteilhafte Ausgestaltungen des erfindungsgemäßen Verfahrens samt einer Einrichtung zur Durchführung derselben sind in den Unteransprüchen gekennzeichnet und werden im folgenden anhand der Figuren beispielhaft näher erläutert.

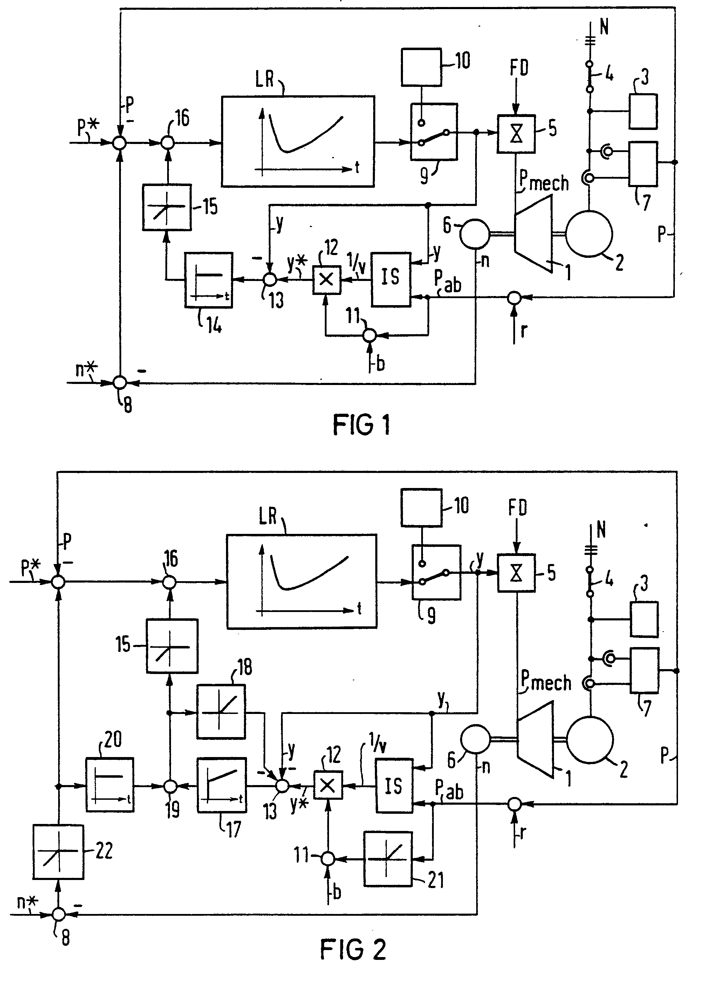

In der Figur 1 ist eine Turbine 1 mit einem elektrischen Generator 2 mechanisch gekuppelt, welcher einen Verbraucher 3 mit elektrischer Energie versorgt und über einen Netzkuppelschalter 4 auf ein mit N bezeichnetes Netz einspeist. Der Turbine 1 wird über Stellventile 5 entsprechend deren Öffnung durch das Stellsignal y Frischdampf FD zugeführt. Das Stellsignal y wird von einem Leistungsregler LR geliefert, welcher von der Differenz zwischen einem einstellbaren Sollwert $P^*$ und dem mittels einer Wirkleistungsmeßeinrichtung 7 erfaßten Istwert $P$ der abgegebenen Generatorleistung beaufschlagt wird. Zur üblichen frequenzabhängigen Leistungskorrektur (Statikbildung) wird dem Eingang des Leistungsreglers zusätzlich noch die in einem Addierglied 8 gebildete Differenz zwischen einem vorgebbaren Drehzahlwert $n^*$ — in der Regel ein der Frequenz des Netzes entsprechender Wert — und einer der Turbinendrehzahl proportionale Größe $n$ zugeführt, welche von einem mechanisch mit der Turbine 1 gekuppelten Drehzahlgeber 6 geliefert wird. Der bezüglich seines inneren Aufbaus nicht weiter dargestellte Leistungsregler LR kann ein integrales Verhalten aufweisen und ist im übrigen an die aus Generator, Turbine und Netz bestehenden Regelstrecke angepaßt. Über einen Schalter 9 wird während des Hochfahrens der Turbine bis zur Synchronisation mit dem Netz das Stellsignal y vom Ausgang einer ebenfalls nicht weiter dargestellten Anfahreinrichtung 10, beispielsweise einem Drehzahlregler, geliefert. Die bisher beschriebene Anordnung deckt sich mit dem eingangs genannten Stand der Technik.

Einer mit IS bezeichneten Identifizierungsschaltung wird nun das Stellsignal y und eine Signal $P_{ab}$ zugeführt, welches sich aus dem der Generatorleistung $P$ entsprechenden Wert und einem Konstanten, den Reibungsverlusten des Turbosatzes entsprechenden Wert $r$ zusammensetzt. Das Signal $P_{ab}$ stellt damit ein Maß für die insgesamt vom Turbosatz abgegebene Leistung dar. Die Identifizierungsschaltung IS bildet für stationäre Betriebspunkte, d. h. für Betriebszustände, in denen die Generatordrehzahl konstant ist und somit die der Turbine zugeführte mechanische Leistung $P_{mech}$ bis auf die Reibungsverluste der abgegebenen Generatorleistung $P$ entspricht, den Quotienten aus Stellsignal y und Gesamtleistungssignal $P_{ab}$ und ist in der Lage, diesen Wert auch bei Lastpendelungen beizubehalten. Da für stationäre Betriebspunkte das Gesamtleistungssignal $P_{ab}$ der Ausgangsgröße $P_{mech}$ des Stellgliedes 5 entspricht, kann unter dieser Voraussetzung die Ausgangsgröße 1/V der Identifizierungsschaltung IS als Maß für den Kehrwert der aktuellen Verstärkung $V = P_{mech}/y$ des Stellgliedes 5 verwendet werden. Diese aktuelle Verstärkung V des Stellgliedes 5 ist dabei eine Funktion mehrerer Parameter, insbesondere des Frischdampfdruckes und der Zahl der jeweils in Betrieb befindlichen Stellventile. Das wirkleistungsproportionale Gesamtleistungssignal $P_{ab}$ wird einem Addierglied 11 zugeführt, dessen zweiter Eingang von einer konstanten Größe b beaufschlagt ist und dessen Ausgang mit dem einen Eingang eines Multiplizierers 12 verbunden ist, dessen zweiter Eingang mit dem Ausgang der Identifizierungsschaltung IS verbunden ist.

Das mit y* bezeichnete Ausgangssignal des Multiplizierers 12 wird als Sollwert für eine Ventilstellungsregelung verwendet, indem es in einem Addierglied 13 mit dem tatsächlichen Stellsignal y verglichen und die Differenz einem Ventilstellungsregler 14 zugeführt wird. Das Ausgangssignal des Ventilstellungsreglers 14 wirkt über ein Begrenzungsglied 15 und ein Addierglied 16 auf den Eingang des Leistungsreglers LR, wobei das Begrenzungsglied 15 Signale positiver Polarität unterdrückt. Der Ventilstellungsregler 14 ist also nur dann im Eingriff, d. h. in korrigierendem Sinne im Eingang des Leistungsreglers LR wirksam, wenn das Stellsignal y größer ist als der vom Ausgang des Multiplizierers 12 bestimmte Sollwert y* der Stellungsregelung.

Zur Erklärung der Wirkungsweise der in Figur 1 dargestellten erfindungsgemäßen Einrichtung werde zunächst das am zweiten Eingang des Addiergliedes 11 anliegende Signal b zu Null angenommen und die Reibungsverluste des Turbosatzes vernachlässigt (r = 0). Dann wird am Ausgang des Multiplizierers 12 ein Stellsignal y* nachgebildet, welches genau dem Wert entspricht, den das Stellsignal y haben müßte, damit die vom Generator abgegebene elektrische Wirkleistung P als mechanische Leistung $P_{mech}$ der Turbine zugeführt wird. Für stationäre Betriebspunkte (n = constant) stimmen unter den obigen Voraussetzungen tatsächliches Stellsignal y und das nachgebildete Stellsignal y* vollkommen überein. Weil die Identifizierungsschaltung IS den von ihr für einen stationären Betriebspunkt ermittelten Wert der Stellgliedverstärkung bzw. deren Kehrwert 1/V auch noch eine Zeit lang nach Verlassen dieses stationären Betriebspunktes beibehält, entspricht jeder Unterschied zwischen dem Ausgangssignal y* des Multiplizierers 12 und dem Stellsignal y einem nicht in abgegebene Generatorwirkleistung sondern in Beschleunigungsleistung umgesetzten Anteil der der Turbine 1 zugeführten mechanischen Leistung $P_{mech}$, der sich z. B. bei plötzlichem Verschwinden oder Reduzieren der Generatorwirkleistung des Turbosatzes in einem entsprechenden Drehzahlanstieg bemerkbar machen muß. Grundsätzlich kann also durch Überwachung des Ausgangssignals des Addiergliedes 13 zum frühest möglichen Zeitpunkt erkannt werden, daß ein Beschleunigungsvorgang einsetzen wird und es kann weiterhin durch quantitative Auswertung und gegenkoppelnde Rückführung dieses der Beschleunigungsleistung proportionalen Signals auf den Stellgliedeingang dafür gesorgt werden, daß die Öffnung der Ventile der jeweils abgegebenen Wirkleistung angepaßt und somit ein unzulässiger Drehzahlanstieg vermieden wird.

Das nachgebildete Stellsignal y* schreibt genau den Wert für das tatsächliche Stellsignal y vor, der einzustellen wäre, um ein Gleichgewicht zwischen zugeführter mechanischer Leistung und abgegebener elektrischer Leistung herbeizuführen. Die Verstärkung des im Ausführungsbeispiel der Figur 1 dargestellten, als Proportionalregler ausgeführten Ventilstellungsreglers 14 sollte so groß gewählt werden, daß bei Lastabwurf oder Netzkurzschluß der über das Begrenzungsglied 15 und das Addierglied 16 auf den Eingang des Leistungsreglers LR gelangende Korrektureinfluß größer ist als die bei diesen Störfällen in gegenläufigem Sinn wirkende, aus der Differenz zwischen Leistungssollwert P* und Leistungsistwert P gebildete Größe, welche am zweiten Eingang des Addiergliedes 16 wirkt.

Mit der bisherigen Voraussetzung, daß die dem Addierglied 11 zugeführte Zusatzgröße b Null ist, würde sich der Ventilstellungsregler 14 auch gegen eine bei betriebsmäßig beabsichtigter Erhöhung der abzugebenden Generatorleistung P erforderliche Vergrößerung des Stellsignals y wehren bzw. sie unmöglich machen. Daher wird dem Addierglied 11 die Zusatzgröße b additiv zugeführt, welche praktisch dem Leistungsistwert entspricht, um den die zugeführte mechanische Leistung größer sein darf als die momentan abgegebene Wirkleistung des Generators 2. Dieser Grenzwert b beträgt nur einen Bruchteil, beispielsweise 10 % der Generatornennleistung. Auf einen diesem Bruchteil der Generatornennleistung entsprechenden Wert wird im Falle der vorerwähnten Störfälle — Lastabwurf und Netzkurzschluß (P = 0) — das Stellsignal y reduziert, im Falle des Teillastabwurfes wird das Stellsignal y auf einen solchen Wert gebracht, mit dem immer 10 % mehr Leistung zugeführt als jeweils abgegeben wird.

Mit der Einrichtung gemäß Figur 1 kann also grundsätzlich sichergestellt werden, daß unmittelbar auf eine plötzliche Entlastung des Generators vom Ventilstellungsregler 14 sofort eine Schließbewegung der Stellventile veranlaßt wird, welche solange anhält, bis der Turbine nur noch eine geringfügig — durch den Grenzwert b bestimmt — über dem Wert der gerade abgegebenen Leistung liegende mechanische Leistung zugeführt wird. Die sich daraus ergebenden Drehzahlüberhöhungen können dann ohne weiteres vom Ausgangssignal des Addiergliedes 8 abgefangen werden, mit welchem dann ein weiteres Schließen der Stellventile 5 bewirkt wird.

Bei der Realisierung der erfindungsgemäßen Verfahrens kann es Fälle geben, wo die Verstärkung des Ventilstellungsreglers mit Rücksicht auf die Dynamik bzw. Stabilität nicht groß genug gewählt werden kann, um immer sicherzustellen, daß bei Entlastungen sein auf Schließen der Stellventile gerichtetes Ausgangssignal überwiegt. Bei dem in Figur 2 dargestellten Ausführungsbeispiel der Erfindung ist deshalb als Ventilstellungsregler ein PI-Regler 17 verwendet. Er verändert bei Überwiegen des Stellsignals $y$ über den Sollwert $y^*$ sein Ausgangssignal in negativer Richtung solange, bis der Regelabgleich erzielt, d. h. $y = y^*$ ist. Überwiegt dagegen das als Sollwert verwendete nachgebildete Stellsignal $y^*$, dann wirkt das Ausgangssignal des PI-Reglers 17 nicht auf den Leistungsregler LR sondern über das Begrenzungsglied 18 in gegenkoppelndem Sinne auf den Eingang des Reglers 17. Das Ausgangssignal des PI-Reglers 17 ändert sich dann solange, bis das Ausgangssignal des Begrenzungsgliedes 18 eine dem Wert $b/V$ entsprechende Größe aufweist. Das Ausgangssignal des PI-Reglers 17 wirkt auf den einen Eingang eines Addiergliedes 19, dessen zweiter Eingang über ein Proportionalglied 20 mit dem Ausgang eines Begrenzungsgliedes 22 verbunden ist. Auf diese Weise wird bei Drehzahlüberhöhungen dem Ausgangssignal des Reglers 17 ein dieser Überhöhung proportionaler Betrag hinzugefügt. Es läßt sich zeigen, daß aufgrund des Integralverhaltens des PI-Reglers 17 bzw. des Leistungsreglers LR mit dem Ausgangssignal des Proportionalgliedes 20 ein Einfluß auf das Stellsignal $y$ ausgeübt wird, welcher proportional der Beschleunigung der Turbine ist. Damit ist eine zusätzliche Sicherheit gegen ein Durchgehen der Turbine bei Entlastungen gegeben.

Für den Fall, daß in der sich bis zum Stellglied erstreckenden Wirkungskette Verzögerungsglieder angeordnet sind, kann es sich als zweckmäßig erweisen, dem Proportionalglied 20 zusätzlich noch ein D-Verhalten zu verleihen.

Da negative Stellsignale $y$ nicht realisierbar sind, ist es für die Zeit, in der vom Generator Wirkleistung aufgenommen wird, auch nicht zweckmäßig, einen entsprechenden negativen Stellungssollwert $y^*$ vorzugeben. Es wird daher ein Begrenzungsglied 21 vorgesehen, welches Signale P von negativer Polarität im Eingang des Addiergliedes unterdrückt.

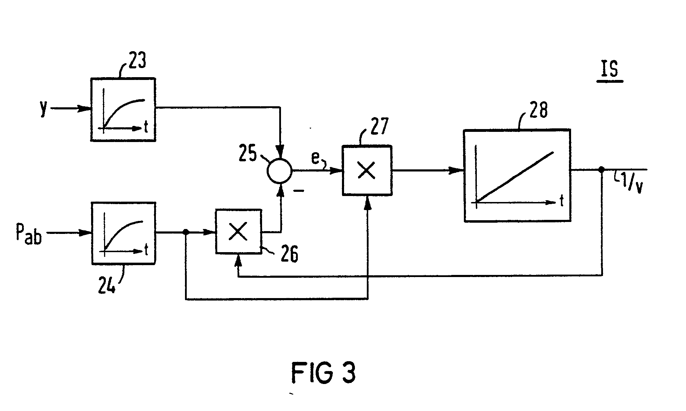

Figur 3 zeigt eine einfache Möglichkeit zur Realisierung der in den Figuren 1 und 2 mit IS bezeichneten Identifizierungsschaltung. Das Stellsignal $y$ beaufschlagt über ein Glättungsglied 23 ein Addierglied 25, dessen anderem Eingang die der abgegebenen Leistung proportionale Größe $P_{ab}$ ebenfalls über ein Glättungsglied 24 sowie über einen Multiplizierer 26 zugeführt ist. Das Ausgangssignal $e$ des Addiergliedes 25 ist über einen zweiten Multiplizierer 27 mit dem Eingang eines Integrators 28 verbunden, dessen Ausgang dem zweiten Eingang des dem Glättungsglied 24 nachgeordneten Multiplizierers 26 beaufschlagt. Durch die Glättungsglieder 23 und 24 soll erreicht werden, daß die Größen $y$ und $P_{ab}$ von der Identifizierungsschaltung IS nur mit ihren stationären Werten verarbeitet werden. Das mit $1/V$ bezeichnete Ausgangssignal des Integrators 28 wird sich solange ändern, bis dessen Eingangsgröße verschwindet, d. h. $y - P_{ab}/V = 0$ oder $1/V = y/P_{ab}$ ist, womit im stationären Zustand ($P_{ab} = P_{mech}$) der Kehrwert $1/V$ des Verstärkungsfaktors $V$ identifiziert ist. Durch die Verwendung des Multiplizierers 27 ergibt sich noch der Vorteil, daß diese Identifikation umso schneller erfolgt, je größer die Generatorleistung P ist.

Insgesamt gesehen, eröffnet sich also die Möglichkeit, bei sämtlichen auftretenden Betriebsfällen, einschließlich der Störfälle Lastabwurf und Netzkurzschluß den Leistungsregler dauernd im Eingriff zu belassen, wenn ihm ein Ventilstellungsregler erfindungsgemäß beigeordnet wird.

**Patentansprüche**

1. Verfahren zur Regelung eines aus einem Generator (2) und einer Turbine (1) bestehenden Turbosatzes mit einem Leistungsregler (LR), der Stellsignale (y) für der Turbine vorgeschaltete Stellventile (5) ausgibt, wobei ein der jeweils der Turbine zugeführten mechanischen Leistung ($P_{mech}$) entsprechendes erstes Signal (y) mit einem der von dem Turbosatz abgegebenen Leistung ($P_{ab}$) entsprechendem zweiten Signal ($y^*$) verglichen wird und von einem Ventilstellungsregler (14, 17) ein auf Schließen der Stellventile gerichtetes Korrektursignal ausgegeben wird, wenn das erste Signal (y) das zweite Signal ($y^*$) um einen vorgebbaren Grenzwert (b) übersteigt, gekennzeichnet durch folgende Merkmale :

a) Mit dem für stationäre Betriebspunkte ermittelten Verhältnis ($1/V$) von Stellsignal (y) zu mechanischer Leistung ($P_{mech}$) und der jeweils um den Grenzwert (b) erhöhten abgegebenen Leistung ($P_{ab}$) wird ein Sollwert ($y^*$) für eine ein erstes Korrektursignal erzeugende Ventilstellungsregelung gebildet.

b) Aus der positiven Differenz zwischen der Turbinendrehzahl (n) und einer vorgebbaren Drehzahl ($n^*$) wird ein beschleunigungsabhängiges Signal gebildet und ein zweites, ebenfalls auf ein Schließen der Stellventile gerichtetes Korrektursignal zur Wirkung gebracht.

2. Einrichtung zur Durchführung des Verfahrens nach Anspruch 1, gekennzeichnet durch folgende Merkmale :

a) einer vom Stellsignal (y) und von einem der abgegebenen Leistung proportionalem Signal ($P_{ab}$) beaufschlagten Identifizierungsschaltung (IS) ist ein Multiplizierer (12) nachgeordnet, dessen zweiter Eingang von dem um den Grenzwert (b) erhöhten leistungsproportionalen Signal ($P_{ab}$) beaufschlagt ist, wobei das Ausgangssignal ($y^*$) des Multiplizierers als Sollwert einem Ventilstellungsregler (17) mit integralem Verhalten zugeführt ist ;

b) dem Eingang eines Addiergliedes (19) wird das Ausgangssignal des Ventilstellungsreglers (17) zugeführt und seinem anderen Eingang ein zweites Signal, welches proportional der positiven Differenz zwischen der Turbinendrehzahl (n) und der vorgegebenen Drehzahl (n*) ist;

c) der Ausgang des Addiergliedes (19) ist zwei Begrenzungsgliedern (15, 18) zugeführt, wobei das eine Begrenzungsglied (15) ausgangsseitig mit dem Eingang des Leistungsreglers (LR) verbunden ist und nur für Eingangssignale solcher Polarität durchlässig ist, die auf ein Schließen der Stellventile (5) gerichtet sind, während das andere Begrenzungsglied (18) mit seinem Ausgangssignal in gegenkoppelndem Sinn auf den Eingang des Ventilstellungsreglers (17) wirkt und nur für Eingangssignale der anderen Polarität durchlässig ist.

3. Einrichtung nach Anspruch 2, dadurch gekennzeichnet, daß das zweite Signal dem Addierglied (19) über ein PD-Glied zugeführt ist.

4. Einrichtung nach einem der Ansprüche 2 oder 3, dadurch gekennzeichnet, daß die Identifizierungsschaltung (IS) aus einem Integrator (28) besteht, der mit der Differenz zwischen einem ersten, dem Stellsignal proportionalem Signal (y) und einem zweiten der abgegebenen Leistung (P_{ab}) und dem Ausgangssignal des Integrators (28) proportionalem Signal beaufschlaft ist, wo-bei beide Eingangssgrößen der Identifizierungs-sschaltung über Verzögerungsglieder (23, 24) zugeführt sind.

5. Einrichtung nach Anspruch 4, dadurch gekennzeichnet, daß dem Integrator (28) ein Multiplizierer (27) unmittelbar vorgeordnet ist, dessen zweiter Eingang mit dem der abgegebenen Leistung proportionalem Signal beaufschlagt ist.

**Claims**

1. Method of controlling a turbo set, the turbo set consisting of a generator (2) and a turbine (1), with a power regulator (LR), which emits control signals (y) for previously opened turbine control valves (5) wherein a first signal (y), which corresponds to the mechanical power (P_{mech}) supplied in each case to the turbine, is compared with a second signal (y*), which corresponds to the power output (P_{ab}) from the turbo set, and a correcting signal directed at closing the control valves is emitted from a valve-position regulator (14, 17) when the first signal (y) exceeds the second signal (y*) by a limiting value (b) which may be preset, characterised by the following features :

a) the rated value (y*) for valve-position regulation, generating a first correcting signal, is established with the ratio (1/V), determined for stationary operating points from control signal (y) at mechanical power (P_{mech}), and with the power output (P_{ab}) which is increased, in each case, by the limiting value (b) ;

b) from the positive difference between the turbine speed (n) and a speed (n*) which may be preset, an acceleration-dependent signal is established and a second correcting signal, which is also directed at closing the control valves, is brought into effect.

2. Device for carrying out the method according to claim 1, characterised by the following features :

a) arranged after an identification circuit (IS), upon which act the control signal (y) and a signal (P_{ab}) proportional to the power output, there is a multiplier (12), upon whose second input acts the signal (P_{ab}) increased by the limiting value (b), the output signal (y*) of the multiplier being supplied as a rated value to a valve-position regulator (17) with integral behaviour ;

b) the output signal of the valve-position regulator (17) is supplied to one input of an adder (19) and a second signal, which is proportional to the positive difference between the turbine speed (n) and the preset speed (n*), is supplied to its other input ;

c) two limiting elements (15, 18) are supplied at the output of the adder (19), the output of one limiting element (15) being connected to the input of the power regulator (LR) and that limiting element (15) only passing input signals of such polarity that they are directed at closing the control valves (5), while the output signal from the other limiting element (18) acts to provide negative feedback to the input of the valve-position regulator (17) and that limiting element (18) only passes input signals of the opposite polarity.

3. Device according to claim 2, characterised in that the second signal is supplied to the adder (19) via a PD element.

4. Device according to one of the claims 2 or 3, characterised in that the identification circuit (IS) consists of an integrator (28), which has as its input the difference between a first signal (y) proportional to the control signal and a second signal which is proportional to the power output (P_{ab}) and the output signal of the integrator (28), both input values of the identification circuit being supplied via delay elements (23, 24).

5. Device according to claim 4, characterised in that arranged immediately before the integrator (28) there is a multiplier (27), upon whose second input there acts the signal proportional to the power output.

**Revendications**

1. Procédé pour régler une turbo-génératrice constituée par une génératrice (2) et une turbine (1) et comportant un régulateur de puissance (LR) qui délivre des signaux de réglage (4) pour des vannes de réglage (5) montées en amont de la turbine, et selon lequel un premier signal correspondant à la puissance mécanique (P_{mech}) envoyée respectivement à la turbine est comparé à un second signal (y*) correspondant à la puissance (P_{ab}) délivrée par la turbo-génératrice, et un signal de correction provoquant la fermeture des vannes de réglage est délivré par un régulateur (14, 17) de position des vannes, lorsque le premier signal (y) dépasse le second signal (y*), d'une valeur limite (b) pouvant être déterminée, caractérisé par les caractéristiques suivantes :

a) avec le rapport (I/V) déterminé pour des points de fonctionnement fixes, du signal de réglage (y) à la puissance mécanique ($P_{mech}$) et avec la puissance délivrée ($P_{ab}$) accrue respectivement de la valeur limite (b), on forme une valeur de consigne (y*) pour une régulation de la position des vannes, produisant un premier signal de correction,

b) à partir de la différence positive entre la vitesse de rotation (n) de la turbine et une vitesse de rotation (n*) pouvant être déterminée, on forme un signal qui est fonction de l'accélération et on déclenche la mise en œuvre d'un second signal de correction déclenchant également la fermeture des valves de réglage.

2. Dispositif pour la mise en œuvre du procédé selon la revendication 1, caractérisé par les caractéristiques suivantes :

a) en aval d'un circuit d'identification (IS), chargé par le signal de réglage (y) et par un signal ($P_{ab}$) proportionnel à la puissance délivrée, se trouve branché un multiplicateur (12) dont la seconde entrée est chargée par le signal ($P_{ab}$) proportionnel à la puissance accrue de la valeur limite (b), le signal de sortie (y*) du multiplicateur étant envoyé en tant que valeur de consigne à un régulateur (17) de la position des vannes, qui possède un comportement intégral ;

b) le signal de sortie du régulateur (17) de la position des vannes est envoyé à l'entrée d'un circuit additionneur (19) tandis qu'à son autre entrée est envoyé un second signal qui est proportionnel à la différence positive entre la vitesse de rotation (n) de la turbine et la vitesse de rotation prédéterminée (n*) ;

c) le signal de sortie du circuit additionneur (19) est envoyé à deux circuits de limitation (15, 18), dont l'un (15) est relié par sa sortie à l'entrée du régulateur de puissance (LR) et n'est passant que pour les signaux d'entrée possédant une polarité telle qu'il déclenche une fermeture des vannes de réglage (5), tandis que l'autre circuit de limitation (18) agit par son signal de sortie, dans le sens d'une contre-réaction, sur l'entrée du régulateur (17) de la position des vannes est n'est passant que pour des signaux d'entrée possédant l'autre polarité.

3. Dispositif suivant la revendication 2, caractérisé par le fait que le second signal est envoyé au circuit additionneur (19) par l'intermédiaire d'un circuit à action proportionnelle et par dérivation.

4. Dispositif suivant l'une des revendications 2 ou 3, caractérisé par le fait que le circuit d'identification (IS) est constitué par un intégrateur (28) qui est chargé par la différence entre un premier signal (y) proportionnel au signal de réglage et un second signal proportionnel à la puissance délivrée ($P_{ab}$) et au signal de sortie de l'intégrateur (28), les deux grandeurs d'entrée étant envoyées au circuit d'identification par l'intermédiaire de lignes à retard (23, 24).

5. Dispositif suivant la revendication 4, caractérisé par le fait qu'un multiplicateur (27), dont la seconde entrée est chargée par le signal proportionnel à la puissance délivrée, est branché directement en amont de l'intégrateur (28).

**FIG 1**

**FIG 2**

FIG 3